# EUROPÄISCHE PATENTANMELDUNG

(11) **EP 4 683 193 A1**
(43) Veröffentlichungstag der Anmeldung: **21.01.2026**
(21) Anmeldenummer: 24189476.5
(22) Anmeldetag: 18.07.2024
(51) Int. Cl.: H02M 1/00, H02M 7/5387

(54) **UMRICHTERSTEUERUNG MIT VERBESSERTER VORGABE DER PULSFREQUENZ**

(71) Anmelder: Siemens Aktiengesellschaft, 80333 München (DE)
(72) Erfinder: Künzel, Stefan, 91056 Erlangen (DE); Kaiser, Matthias, 91301 Forchheim (DE)
(74) Vertreter: Siemens Patent Attorneys

(57) **Zusammenfassung**

Eine Umrichtersteuerung (4) nimmt von einer übergeordneten Steuereinrichtung (5) mit einer Abtastfrequenz (fS) immer wieder einen neuen Sollwert (I*) für eine elektrische Größe (I) entgegen. Die Umrichtersteuerung (4) ermittelt mit einer Pulsfrequenz (fP) Ansteuersignale (C) für Halbleiterschalter (6) eines Umrichters (2) und steuert die Halbleiterschalter (6) mit der Pulsfrequenz (fP) entsprechend an, so dass der Umrichter (2) einer über den Umrichter (2) mit elektrischer Energie versorgten Last (1) die mit dem jeweiligen Sollwert (I*) korrespondierende elektrische Größe (I) bereitstellt. Die Umrichtersteuerung (4) nimmt über eine Schnittstelle (10) einen gewünschten Wert (fW) für die Pulsfrequenz (fP) entgegen. Die Umrichtersteuerung (4) ermittelt die Pulsfrequenz (fP) derart, dass die Pulsfrequenz (fP) möglichst nahe an dem gewünschten Wert (fW) für die Pulsfrequenz (fP) liegt und die Bedingung Pulsfrequenz (fP) = n1/n2 x Abtastfrequenz (fS) erfüllt. n1 und n2 sind natürliche Zahlen. n2 überschreitet einen vorbestimmten Maximalwert (n2max) nicht.

## Beschreibung

Die vorliegende Erfindung geht aus von einem Betriebsverfahren für eine Umrichtersteuerung,
- wobei die Umrichtersteuerung von einer übergeordneten Steuereinrichtung mit einer Abtastfrequenz immer wieder einen neuen Sollwert für eine elektrische Größe entgegennimmt,
- wobei die Umrichtersteuerung mit einer Pulsfrequenz Ansteuersignale für Halbleiterschalter eines Umrichters ermittelt und die Halbleiterschalter mit der Pulsfrequenz entsprechend ansteuert, so dass der Umrichter einer über den Umrichter mit elektrischer Energie versorgten Last die mit dem jeweiligen Sollwert korrespondierende elektrische Größe bereitstellt,
- wobei die Umrichtersteuerung über eine Schnittstelle einen gewünschten Wert für die Pulsfrequenz entgegennimmt.

Die elektrische Größe ist typischerweise ein Strom. Es kann sich im Einzelfall aber auch um eine Spannung handeln. Die Last kann insbesondere eine elektrische Maschine sein. Die Ansteuersignale können insbesondere pulsweitenmoduliert sein. Über die Schnittstelle kann der Umrichtersteuerung die Pulsfrequenz vorgegeben werden. Diese Sachverhalte gelten sowohl im Stand der Technik als auch im Rahmen der vorliegenden Erfindung.

Die vorliegende Erfindung geht weiterhin aus von einem Steuerprogramm, wobei das Steuerprogramm Befehle umfasst, die bei ihrer Ausführung durch eine Umrichtersteuerung die Umrichtersteuerung veranlassen, ein derartiges Betriebsverfahren auszuführen.

Die vorliegende Erfindung geht weiterhin aus von einer Umrichtersteuerung, wobei die Umrichtersteuerung mit einem derartigen Steuerprogramm programmiert ist, so dass die Umrichtersteuerung im Betrieb ein derartiges Betriebsverfahren ausführt.

Die genannten Gegenstände sind allgemein bekannt.

Im Stand der Technik ist bekannt, die Pulsfrequenz derart einzustellen, dass der Quotient von Pulsfrequenz und Abtastfrequenz eine (positive oder negative) Potenz von 2 ist. Wenn also - beispielsweise - die Abtastfrequenz bei 8 kHz liegt, so kann bei dieser Vorgehensweise die Pulsfrequenz beispielsweise bei 2 kHz, 4 kHz, 8 kHz, 16 kHz oder 32 kHz liegen. Diese Möglichkeit zur Vorgabe der Pulsfrequenz bietet zwar eine gewisse Flexibilität, ist aber recht grob. Beispielsweise gibt es zwischen 4 kHz und 8 kHz oder zwischen 8 kHz und 16 kHz keine Zwischenwerte, auf welche die Pulsfrequenz eingestellt werden könnte.

Im Stand der Technik ist weiterhin bekannt, die Pulsfrequenz - gegebenenfalls innerhalb eines vorbestimmten Wertebereichs - kontinuierlich bzw. quasi-kontinuierlich einzustellen, also auf jeden bzw. nahezu jeden Wert. Beispielsweise kann bei dieser Vorgehensweise bei einer Abtastfrequenz von 8 kHz die Pulsfrequenz beispielsweise von einer Bedienperson völlig kontinuierlich oder in kleinen Schritten mit einer Schrittweite von 1 Hz eingestellt werden. Die Möglichkeit zur kontinuierlichen bzw. quasi-kontinuierlichen Vorgabe kann auf einen vorbestimmten Wertebereich beschränkt sein, beispielsweise auf einen Wertebereich zwischen 4 kHz und 8 kHz.

Diese Möglichkeit zur Vorgabe der Pulsfrequenz ist zwar sehr flexibel. Es besteht jedoch die Gefahr, dass aufgrund einer ungünstigen Einstellung der Pulsfrequenz negative Auswirkungen bei der Ansteuerung der Last auftreten. Insbesondere können sogenannte Schwebungen auftreten. Die möglichen Frequenzen der Schwebungen sind durch den Betrag der Differenz des k1-fachen der Pulsfrequenz und des k2-fachen der Abtastfrequenz gegeben, wobei k1 und k2 natürliche Zahlen sind. Wenn mit fB (mit B für beat = englisch für Schwebung) die Frequenz der Schwebung, mit fP die Pulsfrequenz und mit fS (mit S für sample = englisch für Abtastung) die Abtastfrequenz bezeichnet werden, gilt also fB =|k1fP - k2fS|. Bei ungünstiger Wahl der Pulsfrequenz kann damit die Frequenz der Schwebung sehr klein werden. Wenn - beispielsweise - die Abtastfrequenz bei 8 kHz liegt und als Pulsfrequenz ein Wert von 5,999 kHz oder 6,001 kHz eingestellt wird, so könnte sich beispielsweise eine Schwebung ergeben, die eine Frequenz von 4 Hz aufweist. Denn 4 x 6,001 kHz - 3 x 8 kHz ergibt den Wert 4 Hz. Gleiches gilt, weil es nur auf den Betrag ankommt, auch für 4 x 5,999 kHz - 3 x 8 kHz. Auch hier kann sich eine Schwebung mit 4 Hz ergeben. Wenn also beispielsweise eine Pulsfrequenz von 6,000 kHz eingestellt werden soll, so ist muss die Pulsfrequenz sehr exakt eingestellt werden, um Schwebungen zu vermeiden.

Die Aufgabe der vorliegenden Erfindung besteht darin, Möglichkeiten zu schaffen, mittels derer einerseits eine relativ feine Einstellung der Pulsfrequenz möglich ist, andererseits aber dennoch niederfrequente Schwebungen zuverlässig vermieden werden.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 9.

Erfindungsgemäß wird ein Betriebsverfahren der eingangs genannten Art dadurch ausgestaltet,
- dass die Umrichtersteuerung die Pulsfrequenz derart ermittelt, dass die Pulsfrequenz möglichst nahe an dem gewünschten Wert für die Pulsfrequenz liegt und die Bedingung Pulsfrequenz = n1/n2 x Abtastfrequenz erfüllt,
- wobei n1 und n2 natürliche Zahlen sind und n2 einen vorbestimmten Maximalwert nicht überschreitet.

Durch die Bedingung Pulsfrequenz = n1/n2 x Abtastfrequenz wird erreicht, dass die Frequenz einer Schwebung bei einem Wert von 1/n2 x Abtastfrequenz oder einem ganzzahligen Vielfachen davon liegt. Durch die Möglichkeit, n1 frei zu wählen, kann erreicht werden, dass die (tatsächliche) Pulsfrequenz zumindest in der Nähe des gewünschten Wertes für die Pulsfrequenz liegt. Dadurch, dass der vorbestimmte Maximalwert bei einem hinreichend großen Wert vorgegeben ist, wird erreicht, dass innerhalb eines vorgegebenen Frequenzintervalls hinreichend viele Werte zulässig sind.

Es ist möglich, dass die Umrichtersteuerung über die Schnittstelle zulässige Werte für den gewünschten Wert für die Pulsfrequenz innerhalb eines Wertekontinuums zur Auswahl anbietet. Alternativ ist es möglich, dass die Umrichtersteuerung über die Schnittstelle zulässige Werte für den gewünschten Wert für die Pulsfrequenz nur als diskrete Werte zur Auswahl anbietet, die direkt und unmittelbar als Pulsfrequenz verwendet werden können. Welche dieser beiden Vorgehensweisen ergriffen wird, kann nach Lage des Einzelfalls entschieden werden. In beiden Fällen kann die Vorgabe auf einen vordefinierten Wertebereich beschränkt sein.

Vorzugsweise gibt die Umrichtersteuerung die Pulsfrequenz über die Schnittstelle aus. Dadurch ist der Einheit, welche die gewünschte Pulsfrequenz vorgibt, die tatsächliche Pulsfrequenz bekannt.

Vorzugsweise liegt der vorbestimmte Maximalwert mindestens bei 5, insbesondere mindestens bei 9, und/oder maximal bei 20. Bereits durch den Wert 5 wird eine - wenn auch noch relativ grobe - Abstufung der zulässigen Werte der Pulsfrequenz erreicht. Durch den Wert 9 wird bereits eine relativ feine Abstufung für die zulässigen Werte der Pulsfrequenz erreicht. Durch den Wert 20 wird in Verbindung mit der Abtastfrequenz gewährleistet, dass die Frequenz einer etwaigen Schwebung einen vorbestimmten Minimalwert - nämlich 1/20 der Abtastfrequenz - einhält.

Alternativ ist es möglich, die Umrichtersteuerung den Maximalwert oder einen Mindestabstand, den jedes ganzzahlige Vielfache der Pulsfrequenz von jedem ganzzahligen Vielfachen der Abtastfrequenz einhalten soll, über die Schnittstelle entgegennimmt. In diesem Fall kann der Umrichtereinheit vorgegeben werden, welche Frequenz eine Schwebung mindestens aufweisen muss. Bei Vorgabe des Maximalwertes legt die vorgebende Einheit den vorbestimmten Minimalwert einer etwaigen Schwebung indirekt fest, bei Vorgabe des Mindestabstands direkt.

Üblicherweise nimmt die Umrichtersteuerung die Abtastfrequenz von der übergeordneten Steuereinrichtung entgegen.

Die Schnittstelle kann insbesondere eine Bedienerschnittstelle sein, über welche die Umrichtersteuerung mit einer Bedienperson kommuniziert. In diesem Fall erfolgen Vorgaben für die Umrichtereinheit (beispielsweise die gewünschte Pulsfrequenz) durch die Bedienperson und Ausgaben der Umrichtereinheit über die Schnittstelle an die Bedienperson.

Vorzugsweise stellt die Umrichtersteuerung die Pulsfrequenz mittels einer phasenverriegelten Schleife (PLL = phase locked loop) ein. Dadurch ist gewährleistet, dass die Pulsfrequenz auch tatsächlich dem gewünschten Wert von n1/n2 x Abtastfrequenz entspricht.

Die Aufgabe wird weiterhin durch ein Steuerprogramm mit den Merkmalen des Anspruchs 10 gelöst. Erfindungsgemäß veranlassen die Befehle des Steuerprogramms bei ihrer Ausführung durch die Umrichtersteuerung die Umrichtersteuerung dazu, ein erfindungsgemäßes Betriebsverfahren ausführen.

Die Aufgabe wird weiterhin durch eine Umrichtersteuerung mit den Merkmalen des Anspruchs 11 gelöst. Erfindungsgemäß ist die Umrichtersteuerung mit den Befehlen eines erfindungsgemäßen Steuerprogramms programmiert, so dass die Umrichtersteuerung im Betrieb ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild,
- FIG 2 bis 6: Ablaufdiagramme und
- FIG 7: ein Blockschaltbild.

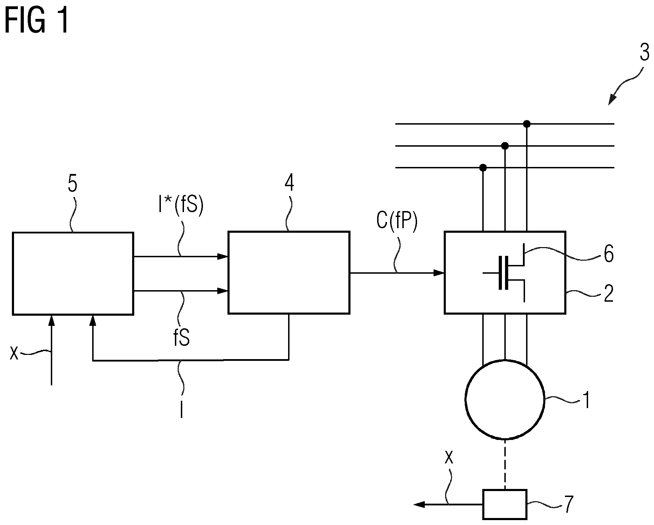

Gemäß FIG 1 wird eine elektrische Last 1 über einen Umrichter 2 aus einer elektrischen Energiequelle 3 mit elektrischer Energie versorgt. Die elektrische Last 1 ist üblicherweise eine elektrische Maschine. Die elektrische Energiequelle 3 kann eine Batterie oder eine andere Gleichstromquelle oder eine Wechselstromquelle sein, insbesondere ein einphasiges Wechselspannungsnetz oder - wie in FIG 1 dargestellt - ein mehrphasiges Wechselspannungsnetz. Der Umrichter 2 wird von einer Umrichtersteuerung 4 gesteuert.

Im laufenden Betrieb nimmt die Umrichtersteuerung 4 von einer übergeordneten Steuereinrichtung 5 immer wieder einen neuen Sollwert I* für eine elektrische Größe I entgegen. Der jeweilige Sollwert I* kann beispielsweise ein Stromsollwert sein, die elektrische Größe I ein Strom. Das Entgegennehmen erfolgt mit einer Abtastfrequenz fS von beispielsweise 8 kHz. Im laufenden Betrieb ermittelt die Umrichtersteuerung 4 weiterhin Ansteuersignale C für Halbleiterschalter 6 des Umrichters 2 und steuert die Halbleiterschalter 6 entsprechend an. Üblicherweise weist der Umrichter 2 mehrere Halbleiterschalter 6 auf, beispielsweise insgesamt sechs Halbleiterschalter 6 für drei Schaltbrücken, die jeweils zwei Halbleiterschalter 6 umfassen. Die Ermittlung der Ansteuersignale C erfolgt derart, dass die elektrische Größe I, die der Umrichter 4 der Last 1 bereitstellt, mit dem jeweiligen Sollwert I* korrespondiert. Die Ermittlung der Ansteuersignale C erfolgt somit unter Berücksichtigung des jeweiligen Sollwertes I*. Die Ermittlung der Ansteuersignale C und die Ansteuerung der Halbleiterschalter 6 erfolgen mit einer Pulsfrequenz fP. Die Pulsfrequenz fP kann beispielsweise im Bereich zwischen 2 kHz und 16 kHz liegen.

Die übergeordnete Steuereinrichtung 5 gibt nicht nur mit der Abtastfrequenz fS jeweils einen neuen Sollwert I* vor. Sie nimmt weiterhin mit der Abtastfrequenz fS auch Werte entgegen, beispielsweise einen Wert für die elektrische Größe I und/oder ein Sensorsignal x eines Sensors 7, mittels dessen ein Zustand der Last 1 erfasst wird. Das Sensorsignal x kann beispielsweise ein Lageistwert oder ein Drehzahlistwert sein, der Sensor 7 ein entsprechender Geber.

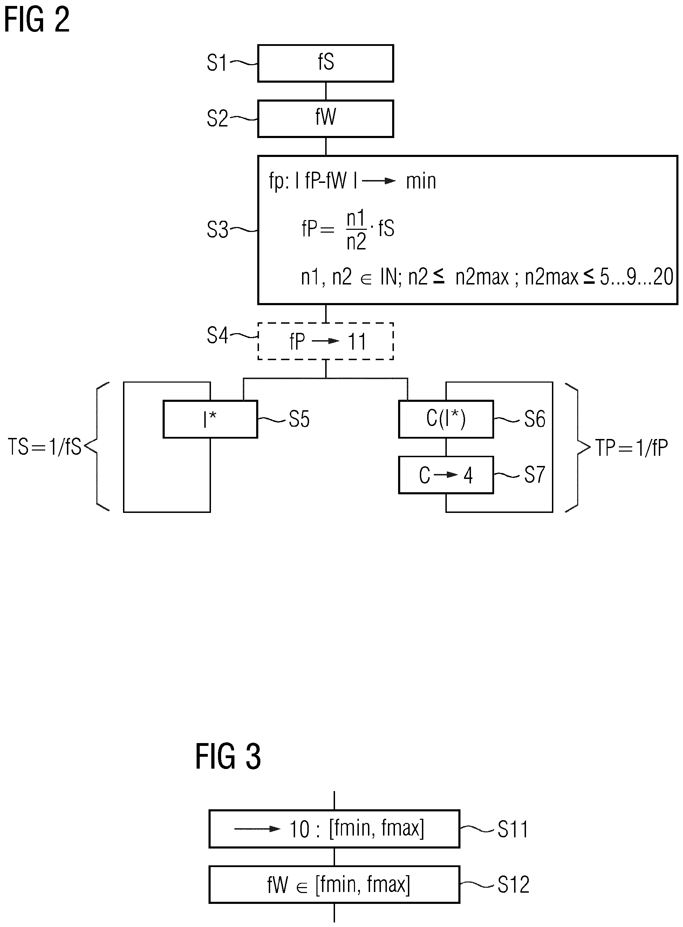

Die Umrichtersteuerung 4 ist mit einem Steuerprogramm 8 programmiert. Das Steuerprogramm 8 umfasst Befehle 9, die bei ihrer Ausführung durch die Umrichtersteuerung 4 die Umrichtersteuerung 4 veranlassen, ein Betriebsverfahren auszuführen, das die vorstehenden Maßnahmen und auch die nachstehend in Verbindung mit FIG 2 zusätzlich erläuterten Maßnahmen umfasst. Die Programmierung der Umrichtersteuerung 4 mit dem Steuerprogramm 5 bewirkt also, dass die Umrichtersteuerung 4 im Betrieb ein derartiges Betriebsverfahren ausführt.

Gemäß FIG 2 wird der Umrichtersteuerung 4 zunächst in einem Schritt S1 die Abtastfrequenz fS bekannt. Beispielsweise kann die Umrichtersteuerung 4 die Abtastfrequenz fS von der übergeordneten Steuereinrichtung 5 entgegennehmen. In einem Schritt S2 nimmt die Umrichtersteuerung 4 einen gewünschten Wert fW für die Pulsfrequenz fP entgegen. Das Entgegennehmen des gewünschten Wertes fW erfolgt über eine Schnittstelle 10. Die Schnittstelle 10 kann beispielsweise eine Bedienerschnittstelle sein, über welche die Umrichtersteuerung 4 mit einer Bedienperson 11 kommuniziert. Über die Bedienerschnittstelle 10 kann die Bedienperson 11 also den gewünschten Wert fW vorgeben.

In einem Schritt S3 ermittelt die Umrichtersteuerung 4 die Pulsfrequenz fP. Die Ermittlung erfolgt derart, dass die Pulsfrequenz fP möglichst nahe an dem gewünschten Wert fW für die Pulsfrequenz fP liegt und weiterhin (exakt) ein rationales Verhältnis zur Abtastfrequenz fS aufweist. Die Ermittlung der Pulsfrequenz fP erfolgt also derart, dass die Bedingung fP = n1/n2 x fS erfüllt ist. Hierbei sind n1 und n2 natürliche Zahlen. n1 kann einen prinzipiell beliebigen (aber selbstverständlich positiven) Wert aufweisen. n2 hingegen liegt minimal bei 1 und maximal bei einem vorbestimmten Maximalwert n2max. Der vorbestimmte Maximalwert n2max muss einen hinreichend hohen Wert aufweisen. In der Regel ist der vorbestimmte Maximalwert n2max mindestens 5. Vorzugsweise ist der Maximalwert n2max größer als 5 und liegt mindestens bei 9. In der Regel liegt der Maximalwert n2max jedoch maximal bei 20.

Die konkret verwendeten Werte für n1 und n2 - beispielsweise 4 und 7 - werden also von der Umrichtersteuerung 4 selbst festgelegt. Festgelegt ist nur der Bereich, innerhalb dessen der Zahlenwert n2 liegen muss.

In einem Schritt S4 gibt die Umrichtersteuerung 4 die Pulsfrequenz fP über die Schnittstelle 10 aus. Der Schritt S4 ist nur optional und daher in FIG 2 nur gestrichelt eingezeichnet.

Gemäß FIG 2 führt die Umrichtersteuerung 4, aufbauend auf dem Schritt S3 oder dem Schritt S4, Schritte S5 bis S7 aus. Im Schritt S5 nimmt die Umrichtersteuerung 4 jeweils einen neuen Sollwert I* entgegen. Im Schritt S6 ermittelt die Umrichtersteuerung 4 die Ansteuersignale C. Im Schritt S7 steuert die Umrichtersteuerung 4 die Halbleiterschalter 6 entsprechend der ermittelten Ansteuersignale C an. Der Schritt S5 wird mit einer Abtast-Zykluszeit TS immer wieder wiederholt, wobei die Abtast-Zykluszeit TS gleich dem Kehrwert der Abtastfrequenz fS ist. Die Schritte S6 und S7 werden mit einer Puls-Zykluszeit TP immer wieder wiederholt, wobei die Puls-Zykluszeit TP gleich dem Kehrwert der Pulsfrequenz fP ist.

Die Vorgabe des gewünschten Wertes fW für die Pulsfrequenz fP kann auf verschiedene Art und Weise erfolgen.

Beispielsweise ist es entsprechend der Darstellung in FIG 3 möglich, den Schritt S2 von FIG 2 in Form von Schritten S11 und S12 zu implementieren. Im Schritt S11 bietet die Umrichtersteuerung 4 - beispielsweise der Bedienperson 11 - über die Schnittstelle 10 zulässige Werte für den gewünschten Wert fW für die Pulsfrequenz fP innerhalb eines Wertekontinuums bzw. eines quasi-Wertekontinuums zur Auswahl an. Das Wertekontinuum kann entsprechend der Darstellung von FIG 3 auf einen vorbestimmten Wertebereich beschränkt sein, dass sich von einer minimalen Frequenz fmin bis zu einer maximalen Frequenz fmax erstreckt. Im Schritt S12 nimmt die Umrichtersteuerung den über die Schnittstelle 10 vorgegebenen Wert fW entgegen.

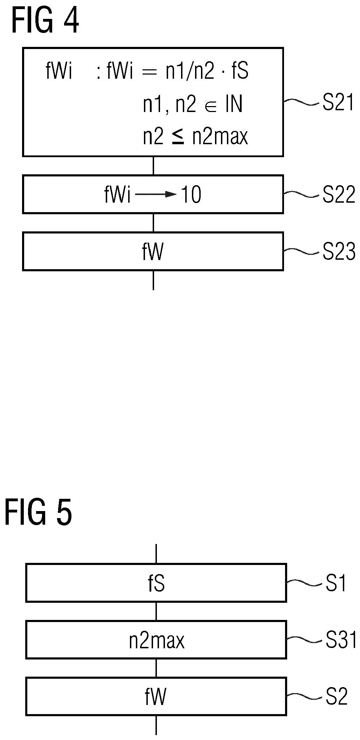

Alternativ ist es entsprechend der Darstellung in FIG 4 möglich, den Schritt S2 von FIG 2 in Form von Schritten S21 bis S23 zu implementieren. Im Schritt S21 ermittelt die Umrichtersteuerung 4 zulässige Werte fWi für den gewünschten Wert fW für die Pulsfrequenz fP. Die Umrichtersteuerung 4 durchläuft für die Zahl n1 einen bestimmten Wertebereich und auch für die Zahl n2 einen bestimmten Wertebereich und ermittelt jedes Wertepaar der natürlichen Zahlen n1, n2 jeweils einen zulässigen Wert fWi = n1/n2 x fS. Der Wertebereich für die Zahl n2 erstreckt sich von 1 bis zu dem Maximalwert n2max. Der Wertebereich für die Zahl n1 erstreckt sich von 1 bis zu einem (weiteren) Maximalwert. Dieser weitere Maximalwert kann alternativ unabhängig von dem jeweiligen Wert für die Zahl n2 sein oder in Abhängigkeit von dem jeweiligen Wert für die Zahl n2 bestimmt sein. Die Umrichtersteuerung 4 ermittelt also im Schritt S21 diskrete Werte fWi, welche die Pulsfrequenz fP annehmen kann. Im Schritt S22 bietet die Umrichtersteuerung 4 - beispielsweise der Bedienperson 11 - über die Schnittstelle 10 die ermittelten zulässigen Werte fWi zur Auswahl. Gegebenenfalls können die ermittelten zulässigen Werte fWi auf einen vorbestimmten Frequenzbereich zwischen der minimalen und der maximalen Frequenz fmin, fmax beschränkt werden. Im Schritt S23 nimmt die Umrichtersteuerung 4 über die Schnittstelle 10 den gewünschten Wert fW entgegen.

Im Falle der Ausgestaltung gemäß FIG 4 ist der Schritt S3 von FIG 2 entartet. Denn die Ermittlung der möglichen Pulsfrequenzen fP wurde bereits im Schritt S21 vorgenommen. Die Umrichtersteuerung 4 kann den im Schritt S23 vorgegebenen Wert fW daher direkt und ohne Änderung als Pulsfrequenz fP übernehmen.

In vielen Fällen ist der Maximalwert n2max der Umrichtersteuerung 4 fest vorgegeben. Es ist aber auch möglich, dass die Umrichtersteuerung 4 den Maximalwert n2max über die Schnittstelle 10 entgegennimmt. Beispielsweise kann entsprechend der Darstellung in FIG 5 nach dem Schritt S1 ein Schritt S31 vorhanden sein. Im Schritt S31 erfolgt das Entgegennehmen des Maximalwertes n2max durch die Umrichtersteuerung 4. Der Schritt S31 könnte alternativ auch vor dem Schritt S1 oder nach dem Schritt S2 ausgeführt werden.

Es ist möglich, dass eine völlig freie Vorgabe des Maximalwertes n2max erfolgt. Oftmals sind innerhalb der Umrichtersteuerung 4 jedoch eine Untergrenze und/oder eine Obergrenze für den Maximalwert n2max festgelegt. Wenn - rein beispielhaft - die Untergrenze für den Maximalwert n2max bei 4 liegt und die Obergrenze für den Maximalwert n2max bei 50 liegt, kann über die Schnittstelle 10 der Maximalwert n2max zwar nach Bedarf vorgegeben werden, aber nur zwischen einem Wert von 4 und einem Wert von 50.

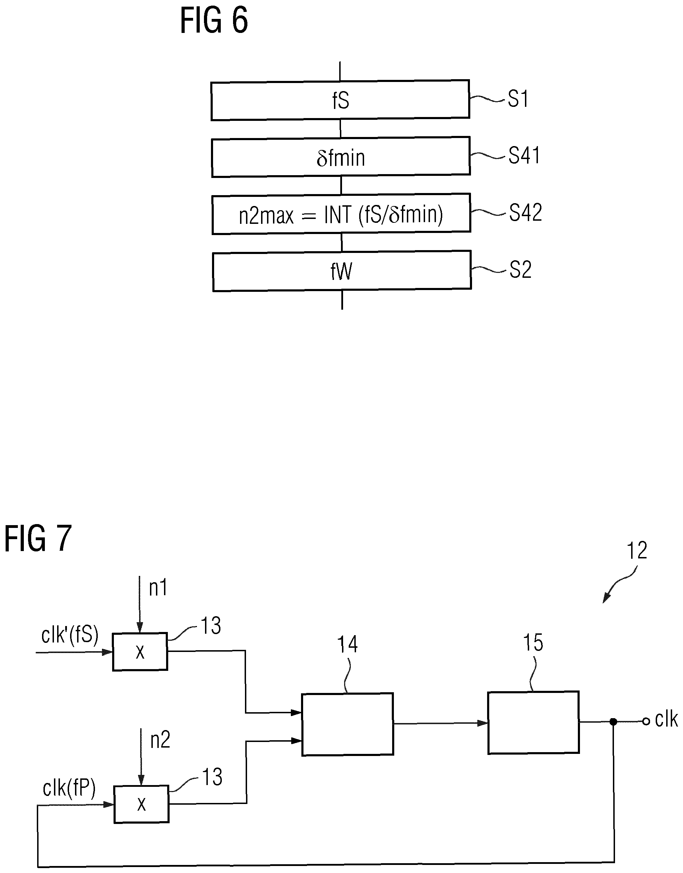

Gleichwertig zu einer direkten Vorgabe des Maximalwertes n2max ist es entsprechend der Darstellung in FIG 6, wenn die Umrichtersteuerung 4 in einem Schritt S41 über die Schnittstelle 10 einen Mindestabstand δfmin entgegennimmt. Der Mindestabstand δfmin gibt an, welchen Abstand jedes ganzzahlige Vielfache der Pulsfrequenz fP von jedem ganzzahligen Vielfachen der Abtastfrequenz fS einhalten soll. Für beliebige natürliche Zahlen k1, k2 soll also die Beziehung |k1fP-k2fS| > δfmin gelten.

In diesem Fall kann die Umrichtersteuerung 4 den Maximalwert n2max aus der Abtastfrequenz fS und dem vorgegebenen Mindestabstand δfmin ermitteln. Die Umrichtersteuerung 4 muss lediglich in einem Schritt S42 den Quotienten der Abtastfrequenz fS und des vorgegebenen Mindestabstands δfmin bilden und hiervon den ganzzahligen Anteil nehmen. Wenn - beispielsweise - die Abtastfrequenz fS 8 kHz beträgt und als Mindestabstand δfmin der Wert 850 Hz vorgegeben wird, so ergibt der Quotient einen Wert von etwas über 9,4. Der ganzzahlige Anteil und damit der Maximalwert n2max beträgt in diesem Fall also 9. Die Schritte S41 und S42 können alternativ vor dem Schritt S1, zwischen den Schritten S1 und S2 oder nach dem Schritt S2 ausgeführt werden.

Die Pulsfrequenz fP muss nicht nur exakt bestimmt werden, sie muss auch exakt eingehalten werden. Zu diesem Zweck kann die Umrichtersteuerung 4 gemäß FIG 7 eine phasenverriegelte Schleife 12 aufweisen. Der phasenverriegelten Schleife 12 werden in diesem Fall Taktsignale clk, clk' zugeführt, die mit der Abtastfrequenz fS und der Pulsfrequenz fP oszillieren. Über Multiplizierer 13, denen die natürlichen Zahlen n1 und n2 zugeführt werden, erfolgt eine Taktvervielfachung. Die Ausgangssignale der Multiplizierer 13 werden einer Fehlerermittlungseinrichtung 14 zugeführt, die ihrerseits einen spannungsgesteuerten Oszillator 15 nachführt. Der spannungsgesteuerte Oszillator 15 generiert das Taktsignal clk, das mit der Pulsfrequenz fP oszilliert. Die phasenverriegelte Schleife 11 kann mit Ausnahme des spannungsgesteuerten Oszillators 15 nach Bedarf analog oder digital realisiert sein. Der spannungsgesteuerte Oszillator 15 ist stets analog realisiert.

Die vorliegende Erfindung weist viele Vorteile auf. Einerseits ist eine zwar nicht beliebige, aber doch recht feine Abstufung der Pulsfrequenz fP möglich. Wenn der Maximalwert n2max für die natürliche Zahl n2 bei 9 liegt, sind bei einer Abtastfrequenz fS von 8 kHz im Bereich zwischen 4 kHz und 8 kHz - zusätzlich zu 4 kHz und 8 kHz - beispielsweise folgende Pulsfrequenzen fP möglich (die jeweils angegebene Pulsfrequenz ist auf 10 Hz gerundet):

| | |
|---|---|
| 4,44 kHz (für n1 = 5 und n2 = 9) | 6,22 kHz (für n1 = 7 und n2 = 9) |
| 4,57 kHz (für n1 = 4 und n2 = 7) | 6,40 kHz (für n1 = 4 und n2 = 5) |
| 4,80 kHz (für n1 = 3 und n2 = 5) | 6,67 kHz (für n1 = 5 und n2 = 6) |
| 5,00 kHz (für n1 = 5 und n2 = 8) | 6,86 kHz (für n1 = 6 und n2 = 7) |
| 5,33 kHz (für n1 = 2 und n2 = 3) | 7,00 kHz (für n1 = 7 und n2 = 8) |
| 5,71 kHz (für n1 = 5 und n2 = 7) | 7,11 kHz (für n1 = 8 und n2 = 9) |
| 6,00 kHz (für n1 = 3 und n2 = 4) | |

Dennoch wird für jede der angegebenen Pulsfrequenzen fP erreicht, dass eine etwaige Schwebung eine Frequenz von mindestens 8 kHz - 7,11 kHz = 0,89 kHz bzw. allgemein von fS/n2max aufweist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Last
- 2: Umrichter
- 3: Energiequelle
- 4: Umrichtersteuerung
- 5: übergeordnete Steuereinrichtung
- 6: Halbleiterschalter
- 7: Sensor
- 8: Steuerprogramm
- 9: Befehle
- 10: Schnittstelle
- 11: Bedienperson
- 12: phasenverriegelte Schleife
- 13: Multiplizierer
- 14: Fehlerermittlungseinrichtung
- 15: spannungsgesteuerter Oszillator

- C: Ansteuersignale
- clk, clk': Taktsignale
- fmax: maximale Frequenz
- fmin: minimale Frequenz
- fP: Pulsfrequenz
- fS: Abtastfrequenz
- fW: gewünschter Wert
- fWi: zulässige Werte
- I: elektrische Größe
- I*: Sollwert
- n1, n2: natürliche Zahlen
- n2max: Maximalwert
- S1 bis S42: Schritte
- TP, TS: Zykluszeiten
- x: Sensorsignal

- δfmin: Mindestabstand

## Patentansprüche

1. Betriebsverfahren für eine Umrichtersteuerung (4),
- wobei die Umrichtersteuerung (4) von einer übergeordneten Steuereinrichtung (5) mit einer Abtastfrequenz (fS) immer wieder einen neuen Sollwert (I*) für eine elektrische Größe (I) entgegennimmt,
- wobei die Umrichtersteuerung (4) mit einer Pulsfrequenz (fP) Ansteuersignale (C) für Halbleiterschalter (6) eines Umrichters (2) ermittelt und die Halbleiterschalter (6) mit der Pulsfrequenz (fP) entsprechend ansteuert, so dass der Umrichter (2) einer über den Umrichter (2) mit elektrischer Energie versorgten Last (1) die mit dem jeweiligen Sollwert (I*) korrespondierende elektrische Größe (I) bereitstellt,
- wobei die Umrichtersteuerung (4) über eine Schnittstelle (10) einen gewünschten Wert (fW) für die Pulsfrequenz (fP) entgegennimmt,
**dadurch gekennzeichnet,**
- **dass** die Umrichtersteuerung (4) die Pulsfrequenz (fP) derart ermittelt, dass die Pulsfrequenz (fP) möglichst nahe an dem gewünschten Wert (fW) für die Pulsfrequenz (fP) liegt und die Bedingung Pulsfrequenz (fP) = n1/n2 x Abtastfrequenz (fS) erfüllt,
- wobei n1 und n2 natürliche Zahlen sind und n2 einen vorbestimmten Maximalwert (n2max) nicht überschreitet.

2. Betriebsverfahren nach Anspruch 1,
**dadurch gekennzeichnet,**
**dass** die Umrichtersteuerung (4) über die Schnittstelle (10) zulässige Werte für den gewünschten Wert (fW) für die Pulsfrequenz (fP) innerhalb eines Wertekontinuums zur Auswahl anbietet.

3. Betriebsverfahren nach Anspruch 1,
**dadurch gekennzeichnet,**
**dass** die Umrichtersteuerung (4) über die Schnittstelle (10) zulässige Werte (fWi) für den gewünschten Wert (fW) für die Pulsfrequenz (fP) nur als diskrete Werte zur Auswahl anbietet, die direkt und unmittelbar als Pulsfrequenz (fP) verwendet werden können.

4. Betriebsverfahren nach Anspruch 1, 2 oder 3,
**dadurch gekennzeichnet,**
**dass** die Umrichtersteuerung (4) die Pulsfrequenz (fP) über die Schnittstelle (10) ausgibt.

5. Betriebsverfahren nach einem der Ansprüche 1 bis 4,
**dadurch gekennzeichnet,**
**dass** der vorbestimmte Maximalwert (n2max) mindestens bei 5 liegt, insbesondere mindestens bei 9, und/oder maximal bei 20 liegt.

6. Betriebsverfahren nach einem der Ansprüche 1 bis 4,
**dadurch gekennzeichnet,**
**dass** die Umrichtersteuerung (4) den Maximalwert (n2max) oder einen Mindestabstand (δfmin), den jedes ganzzahlige Vielfache der Pulsfrequenz (fP) von jedem ganzzahligen Vielfachen der Abtastfrequenz (fS) einhalten soll, über die Schnittstelle (10) entgegennimmt.

7. Betriebsverfahren nach einem der obigen Ansprüche,
**dadurch gekennzeichnet,**
**dass** die Umrichtersteuerung (4) die Abtastfrequenz (fS) von der übergeordneten Steuereinrichtung (5) entgegennimmt.

8. Betriebsverfahren nach einem der obigen Ansprüche,
**dadurch gekennzeichnet,**
**dass** die Schnittstelle (10) eine Bedienerschnittstelle ist, über welche die Umrichtersteuerung (4) mit einer Bedienperson (11) kommuniziert.

9. Betriebsverfahren nach einem der obigen Ansprüche,
**dadurch gekennzeichnet,**
**dass** die Umrichtersteuerung (4) die Pulsfrequenz (fP) mittels einer phasenverriegelten Schleife (12) einstellt.

10. Steuerprogramm, wobei das Steuerprogramm Befehle (9) umfasst, die bei ihrer Ausführung durch eine Umrichtersteuerung (4) die Umrichtersteuerung (4) veranlassen, ein Betriebsverfahren nach einem der obigen Ansprüche auszuführen.

11. Umrichtersteuerung, wobei die Umrichtersteuerung mit einem Steuerprogramm (8) nach Anspruch 10 programmiert ist, so dass die Umrichtersteuerung im Betrieb ein Betriebsverfahren nach einem der Ansprüche 1 bis 9 ausführt.
